**Europäisches Patentamt**

**European Patent Office**

**Office européen des brevets**

(19)

(11) Veröffentlichungsnummer: **0 098 980**
A2

(12) # EUROPÄISCHE PATENTANMELDUNG

(21) Anmeldenummer: **83105754.2**

(22) Anmeldetag: **11.06.83**

(51) Int. Cl.³: **B 66 F 9/04**

(30) Priorität: **12.06.82 DE 3222165**

(43) Veröffentlichungstag der Anmeldung:
**25.01.84 Patentblatt 84/4**

(84) Benannte Vertragsstaaten:
**DE FR GB IT NL**

(71) Anmelder: **Ingenieurbüro für Industrieplanung GmbH**
**Kohlentwiete 16**
**D-2000 Hamburg 50(DE)**

(72) Erfinder: **Gottschalk, Joachim**
**Lohkampstrasse 110**
**D-2000 Hamburg 54(DE)**

(72) Erfinder: **Gottschalk, Otto**
**Jacob-Ahrens-Strasse 20**
**D-2084 Rellingen(DE)**

(74) Vertreter: **Heldt, Gert, Dr. Dipl.-Ing.**
**Neuer Wall 57 IV**
**D-2000 Hamburg 36(DE)**

(54) Ausrüstung für eine Verladebühne.

(57) Bei einer Ausrüstung für eine Verladebühne, an der Ladegut auf Fahrzeuge verschiedener Höhen verladen wird, mit einer Höhenverstellbarkeit durch Schwenkbewegungen, sind diese durch einen Momentausgleich gedämpft. Für den Momentausgleich ist eine mit einem kompressiblen Medium mindestens teilweise gefüllte Kompressionsanordnung vorgesehen, die mindestens auf ihrer Druckseite mit einem Druckspeicher verbunden ist. Sie ist als eine Treppe ausgebildet, die an der Verladebühne stufenlos schwenkbar gelagert ist. Die Treppe besteht aus mehreren Stufen, die in Wangen schwenkbar gelagert sind, von denen mindestens eine mit einer Anlenkung für die Kompressionsanordnung versehen ist, die an der Verladebühne befestigt ist.

EP 0 098 980 A2

## Ausrüstung für eine Verladebühne

Die Erfindung betrifft eine Ausrüstung für eine Verladebühne, an der Ladegut auf Fahrzeuge verschiedener Höhen verladen wird, mit einer Höhenverstellbarkeit durch Schwenkbewegungen, die durch einen Momentenausgleich in der Handhabung gedämpft sind.

Von einer Verladebühne muß das mit der Verladung von Ladegut betraute Personal auf ein Fahrzeug gelangen können, das an der Verladebühne steht, um beladen zu werden. Insbesondere ist es notwendig, bei Tanklastwagen an die Öffnungen zu gelangen, durch die eine zu verladende Flüssigkeit eingefüllt wird, die mit dem Tanklastzug befördert wird. Zu diesem Zwecke begeht der Fahrer des Tanklastzuges über die Verladebühne sein Fahrzeug, durch dessen Befüllungsöffnung er eine Verladeeinrichtung steckt, durch die die Flüssigkeit in den Tank hineinfließt.

Um ihm den Übergang von der Verladebühne auf sein Fahrzeug, insbesondere auf den Behälter, zu erleichtern, befindet sich an der Verladebühne eine von dieser auf das Fahrzeug ragende Treppe. Diese ist an der Verladebühne schwenkbar gelagert und wird nach jedem Verladevorgang aus dem Raum weggeschwenkt, in den das Fahrzeug zum Zwecke des Betankens hineingefahren war. Nachdem das Fahrzeug seinen Standplatz eingenommen hat, wird die Treppe in Richtung auf das Fahrzeug verschwenkt, bis sie mit ihrer von der Verladerampe am weitesten entfernten letzten Stufe oder einem Vierkantfender, der an einer Parallelführung der Treppe befestigt ist, auf dem Tank des Fahrzeuges aufliegt. In dieser Lage der Treppe kann der Fahrer von der Verladebühne auf das Fahrzeug hinüberwechseln und das Einfüllen des Verladegutes betreiben. Da die Fahrzeuge verschiedene Höhen haben, muß die Treppe stufenlos verschwenkbar sein unter Beibehaltung einer horizontalen Stufenlage. Das Verschwenken der Treppe muß darüber hinaus mit erträglicher Kraftanstrengung ermöglicht werden können, um zu verhindern, daß die Treppe unkontrolliert in ihre unterste Schwenklage fällt, wenn beispielsweise dem Fahrer das Gewicht der Treppe zu groß wird, um es in einer Schwenklage festhalten zu können.

Zu diesem Zwecke ist die Treppe mit einem Momentenausgleich versehen. Dieser besteht aus einem Gegengewicht, das sich im Regelfall in einen Raum erstreckt, der im unmittelbaren Umfeld der Treppe liegt. Dadurch können Benutzer der Treppe erheblich behindert werden. Insbesondere besteht die Gefahr, daß sich Benutzer beim Verschwenken der beidseits der Treppe angeordneten Gegengewichte verletzen, wenn diese Schwenkbewegungen ausführen.

Aufgabe der vorliegenden Erfindung ist es daher, den Momentenausgleich der Treppe so zu verbessern, daß er die Behinderung und Verletzungsgefahr eines Benutzers der Treppe ausschließt.

Diese Aufgabe wird erfindungsgemäß dadurch gelöst, daß für den Momentenausgleich eine mit einem kompressiblen Medium mindestens teilweise gefüllte Kompressionsanordnung vorgesehen ist, die mindestens auf ihrer Druckseite mit einem Druckspeicher verbunden ist.

Dieser Momentenausgleich besteht aus Teilen, die nur geringe Bewegungen in Richtung auf die Treppe ausführen. Diese Bewegungen sind so gering, daß sie im Rahmen einer Verkleidung stattfinden können, die so schmal ist, daß sie eine Treppensäule abdeckt. Darüber hinaus finden lediglich Bewegungen in Richtung der Treppensäule statt, die außerhalb der Treppensäule nicht in Erscheinung treten. Schließlich finden die Bewegungen in Richtung einer geraden Linie statt, so daß die beim Ausgleichsgewicht notwendigen Bewegungen um einen Schwerpunkt entfallen. Dadurch wird der Raum kleingehalten, in dem die Gefahr von Verletzungen besteht.

Schließlich erwies es sich bei dem mit Gewichten vorgenommenen Momentenausgleich als nachteilhaft, daß zur Bewegung der Gewichte über den gesamten Bewegungsverlauf in jeder Zeiteinheit etwa die zur Bewegung der Gegengewichte notwendige Kraft gleich groß ist.

Demgegenüber wächst im kompressiblen Medium der durch die Kompressionsanordnung eingeleitete Druck, der sich erst über einen vergleichsweise langen Zeitraum ausgleicht. Beim Beginn des Verschwenkvorganges sind daher die von der Kompressionsanordnung erzeugten Gegenkräfte relativ gering, so daß eine vergleichsweise kleine Kraft ausreicht, um den Verschwenkvorgang der Treppe auszulösen. Sodann wächst jedoch der Druck im Medium schnell an, so daß die Verschwenkbewegung dadurch ebenso schnell gebremst wird. Anschließend gleicht sich der Druck im Medium aus, so daß bei etwa gleichbleibender Gegenkraft die weitere Verschwenkung der Treppe stattfinden kann. Die Kompressionsanordnung erleichtert aber auf diese Weise die Auslösung des Verschwenkvorganges.

Gemäß einer bevorzugten Ausführungsform der Erfindung besteht die Treppe aus mehreren Stufen, die in Wangen schwenkbar gelagert sind, von denen mindestens eine mit einer Anlenkung der Kompressionsanordnung versehen ist, die an der Verladebühne befestigt ist. Auf diese Weise ist es möglich, die Kompressionsanordnung relativ eng im Rahmen der an der Verladebühne befestigten Treppensäule zu führen. Die Kompressionsanordnung ist im unmittelbaren Bereich des Schwenkpunktes an der Wange angelenkt, so daß der Anlenkpunkt bei Schwenkbewegungen der Wange nur relativ kleine Ausweichbewegungen vornehmen muß. Bei einer entsprechenden Verkleidung der Treppensäule können diese Ausweichbewegungen innerhalb der Verkleidung stattfinden, so daß die Gefahr für einen Benutzer der Treppe, bei derartigen Ausweichbewegungen eingeklemmt zu werden, ausgeschlossen ist.

Die Ausrüstung ist ferner versehen mit einem Auffanggitter, das mit der Treppe gekuppelt und an der Verladebühne schwenkbar gelagert ist. Darüber hinaus ist ein Sicherheitshandlauf an der der Verladebühne abgewandten Seite oberhalb eines vor der Verladebühne stehenden Fahrzeuges vorgesehen. Oberhalb der Verladebühne ist ein Übergabegerät für flüssige oder gasförmige Produkte vorgesehen. Das Auffanggitter, der Sicherheitshandlauf und das Übergabegerät sind höhenverstellbar eingerichtet und mit einem hydraulischen Momentenausgleich versehen. Mit diesen Vorrichtungen ist es möglich, einen allseits abgesicherten Arbeitsbereich für einen Benutzer der Verladeeinrichtungen zu schaffen, die in kürzester Zeit an unterschiedliche Größen der Fahrzeuge angepaßt werden kann.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

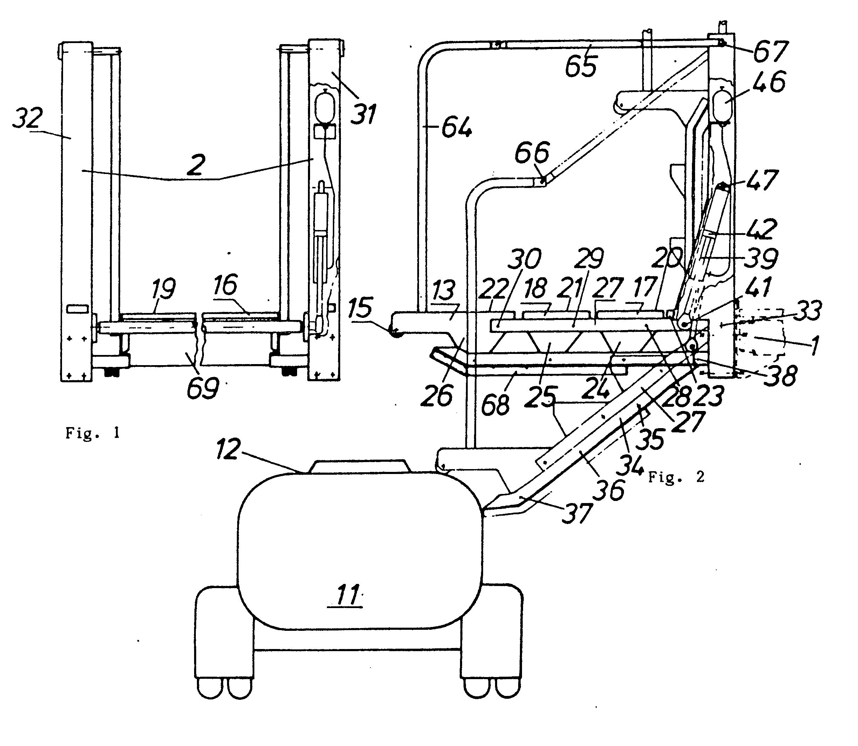

Fig. 1 Eine Seitenansicht einer Treppe in verschiedenen Schwenklagen,

Fig. 2 eine Vorderansicht einer Treppe,

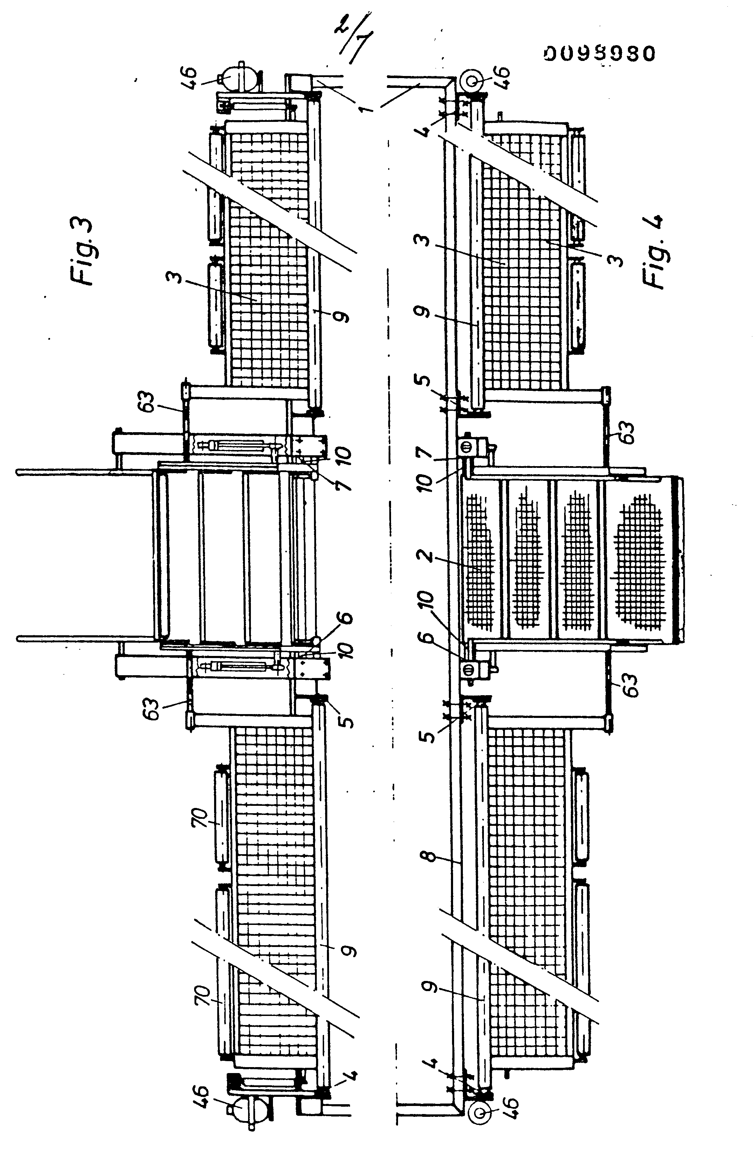

Fig. 3 eine Vorderansicht einer Treppe und eines angekoppelten Fanggitters im eingeschwenkten Zustand,

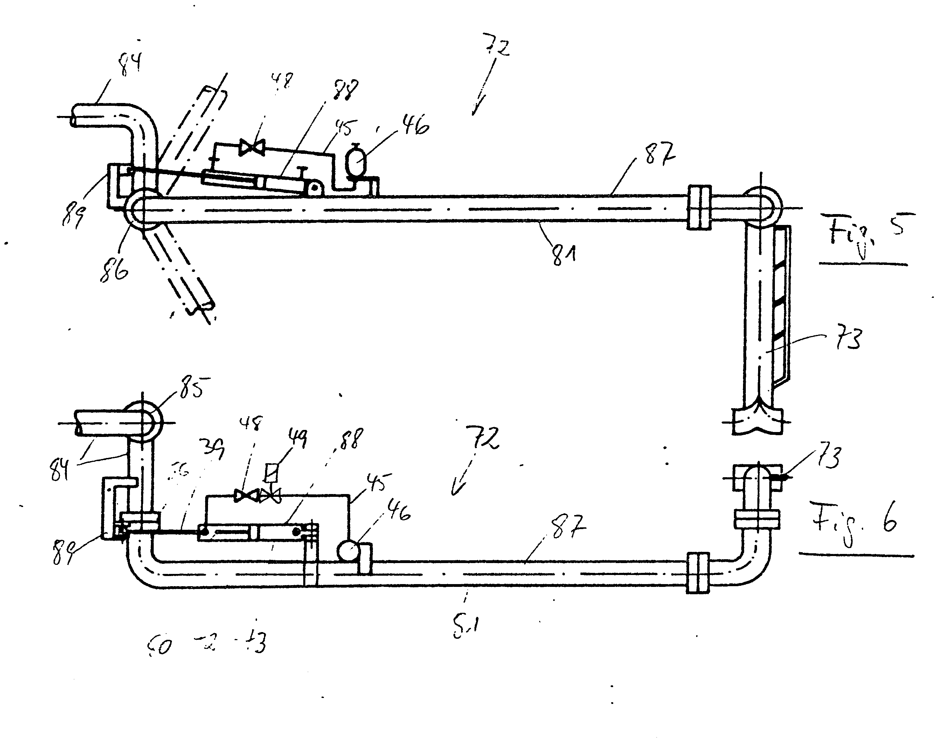

Fig. 4 eine Draufsicht auf eine Treppe mit angekoppeltem Fanggitter im ausgeschwenkten Zustand,

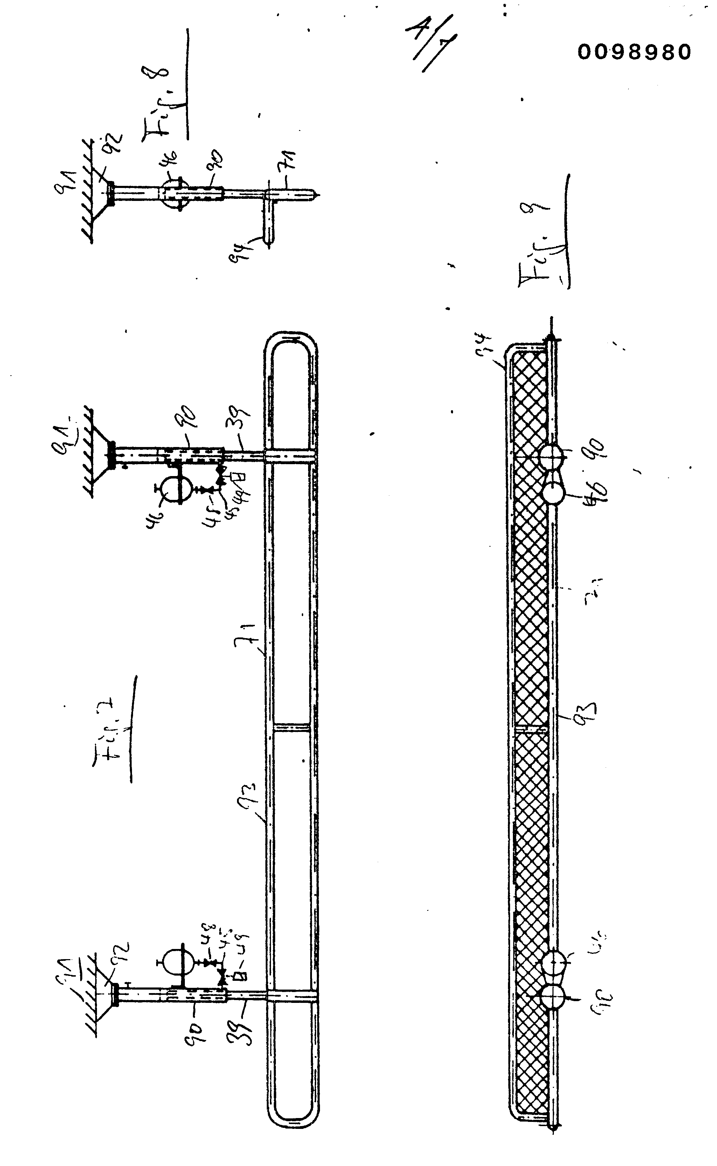

Fig. 5 eine Seitenansicht eines Übergabegerätes,

Fig. 6 eine Draufsicht auf ein Übergabegerät gemäß Fig. 5,

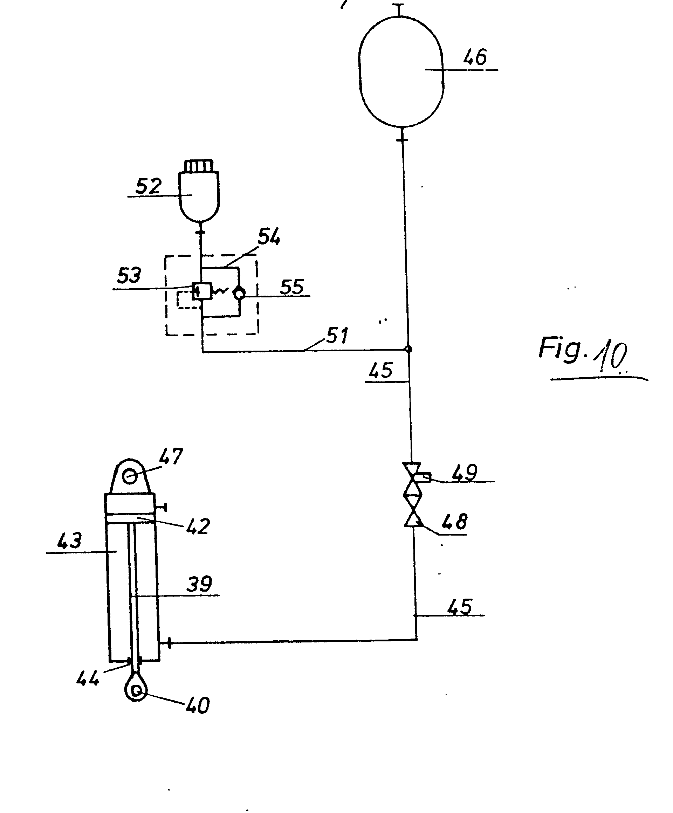

Fig. 7 eine Seitenansicht eines Sicherheitshandlaufes,

Fig. 8 eine Vorderansicht eines Sicherheitshandlaufes mit einer Übersturzsicherung,

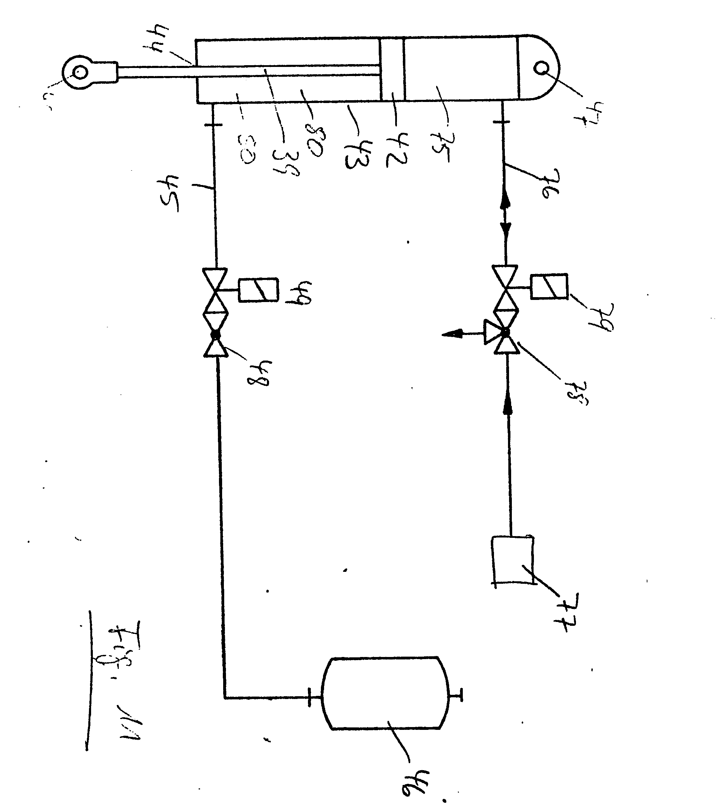

Fig. 9 eine Draufsicht auf einen Sicherheitshandlauf gemäß Fig. 8,

Fig. 10 eine schematische Darstellung einer

- 6 -

Vorrichtung zum hydraulischen Momentenausgleich,

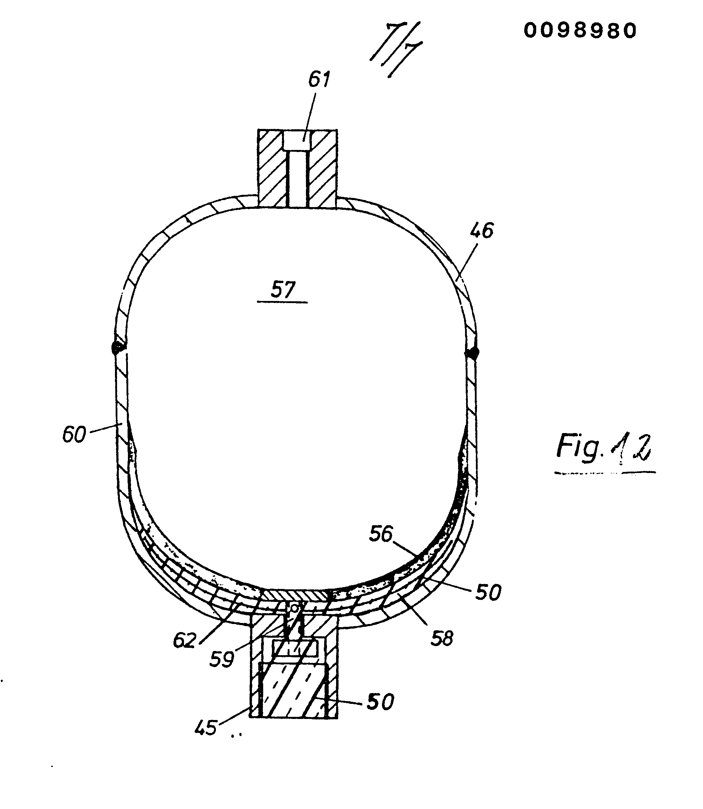

Fig. 11 eine schematische Darstellung einer
Vorrichtung zum hydraulischen Momentenausgleich mit pneumatischer oder
hydraulischer Betätigung und

Fig. 12 einen Längsschnitt durch einen Druckspeicher.

Eine Ausrüstung für eine Verladebühne 1 besteht im
wesentlichen aus einer Treppe 2, einem beidseitig
angeordneten Sicherheitsfanggitter 3, einem parallel
dazu verlaufenden Sicherheitshandlauf 71 und einem
Übergabegerät für fließfähige Medien 72. Die Treppe
2 und das Sicherheitsfanggitter 3 sind in Schwenklagern 4, 5; 6, 7 am Saumenprofil 8 der Verladebühne
1 schwenkbar gelagert. Der Sicherheitshandlauf 71
ist in einem Bereich oberhalb und im Abstand zur Verladebühne 1 höhenverstellbar gelagert. Das Übergabegerät 72 ist ebenfalls oberhalb der Verladebühne 1
angeordnet und in mindestens einer Bewegungsebene
schwenkbar ausgebildet.

Die Treppe 2 und das Sicherheitsfanggitter 3 können
um die Schwenkachsen 9, 10 so verschwenkt werden,
daß sie in einem unmittelbar vor dem Saumenprofil
8 liegenden Bereich der Verladebühne etwa lotrecht
von der Verladebühne 1 aus nach oben weisen. Aus
diesem eingeschwenkten Zustand können sie in Richtung auf einen vor der Verladebühne 1 liegenden
Raum 73 auf ein dort stehendes Fahrzeug 11 ausgeschwenkt werden. Bei diesem Fahrzeug 11 kann es
sich um ein Tankfahrzeug handeln, auf dessen oberer Tankdecke 12 die.Treppe 2 mit ihrer letzten Stufe 13 aufliegt. Oberhalb des Raumes 73 ist das Übergabegerät 72 angeordnet, das mit einem Abfüllkopf 73 versehen ist, der in Richtung auf eine in der Tankdecke 12 vorgesehene Füllungsöffnung 74 des Fahrzeuges absenkbar ist. Oberhalb des Fahrzeuges 11 erstreckt sich auf der der Verladebühne 1 abgewandten Seite der Befüllungsöffnung 74 der Sicherheitshandlauf 71, der insoweit in Richtung auf die Tankdecke 12 abgesenkt werden kann, daß er eine unüberwindliche Sicherung gegen ein ausgleiten des Bedienpersonals bildet.

Um eine Beschädigung des Fahrzeuges 11 zu verhindern, wird die letzte Stufe 13 der Treppe 2 an ihrer der Tankdecke zugewandten Unterkante 14 mit einem rollenartigen Rundfender 15 versehen.

Die Treppe 2 kann aus mehreren Stufen 16, 17, 18, 13 bestehen. Diese Stufen sind zum Betreten mit Oberflächen 19, 20, 21, 22 versehen. Diese Oberflächen 19, 20, 21, 22 verlaufen in etwa planparallel zu einer entsprechenden Oberfläche der Verladebühne 1. Im ausgeschwenkten 90°-Zustand der Treppe 2 befinden sich die Oberflächen 19, 20, 21, 22 der Stufen in horizontaler und paralleler Lage zur Oberfläche der Verladebühne 1.

Die Oberflächen 19, 20, 21, 22 können beispielsweise aus Trittrosten hergestellt sein, die mit Wangen 23, 24, 25, 26 der Stufen 16, 17, 18, 13 fest verbunden sind. Diese Wangen verlaufen in einer Ebene, die im wesentlichen senkrecht zur Ebene der Oberflächen 19,20,21,22 steht. Jeweils eine Wange je Seite begrenzt jede Stufe 16, 17, 18, 13 hinsichtlich ihrer Breite in zwei planparallel zueinander verlaufenden

Ebenen, die im wesentlichen senkrecht zur Ebene der Oberflächen 19, 20, 21, 22 steht. An diesen Wangen 23, 24, 25, 26 sind die einzelnen Stufen 16, 17, 18, 13 über einen Stufenschwenkhebel 27 miteinander verbunden. Jeweils beide Holme des Stufenschwenkhebels 27 laufen parallel zu der von den Wangen 23, 24, 25, 26 vorgegebenen Ebene. In den einander parallel verlaufenden Stufenschwenkhebeln 27 sind die Wangen 23, 24, 25, 26 in Schwenklagern 28, 29, 30 verschwenkbar gelagert. Die der Verladebühne 1 benachbarte erste Stufe 16 ist mit Treppensäulen 31, 32, die an der Verladebühne 1 befestigt sind, fest verbunden.

An den Treppensäulen 31 und 32 ist der Stufenschwenkhebel 27 im Lager 33 schwenkbar gelagert.

In ähnlicher Weise sind die verschwenkbaren Stufen 17, 18, 13 durch eine Stufenparallelführung 34 miteinander verbunden. Diese Stufenparallelführung 34 ist als ein gegen das Kippen der Stufen 17, 18, 13 stützender Schwenkarm ausgebildet, in dem die schwenkbaren Stufen 17, 18, 13 in Schwenklagern 35, 36, 37 gelagert sind. Je eine Stufenparallelführung 34 ist an den beiden Treppensäulen 31, 32 in einem Schwenklager 38 schwenkbar gelagert und sorgt für eine horizontale Lage der Stufen.

Beim Verschwenken der Treppe werden die schwenkbaren Stufen 17, 18, 13 durch den Stufenschwenkhebel 27 einerseits und die Stufenparallelführung 34 andererseits parallel geführt, so daß die Oberflächen 20, 21, 22 in jeder Schwenklage einander horizontal und planparallel verlaufen. Zu diesem Zwecke sind die Schwenklager 33 des Stufenschwenkhebels 27 einerseits und die Schwenklager 38 der Stufenparallelführung
34 sowohl in der Höhe als auch hinsichtlich ihrer
Entfernung vom Saumenprofil 8 so gegeneinander versetzt, daß beim Verschwenken der Treppe 2 der Stufenschwenkhebel 27 immer parallel zur Stufenparallelführung 34 geführt wird.

Am Stufenschwenkhebel 27 ist eine Kolbenstange 39
verschwenkbar angelenkt. Zu diesem Zwecke ist an
der Kolbenstange 39 ein Auge 40 befestigt, das sich
um einen Zapfen 41 verschwenken läßt, der am Stufenschwenkhebel 27 befestigt ist.

Die Kolbenstange 39 trägt an ihrem dem Auge 40 abgewandten Ende einen Kolben 42 mit Kolbendichtung,
der in einem Zylinder 43 gleitend gelagert ist. Die
Kolbenstange 39 wird durch eine druckdichte Pakkung 44 aus dem Zylinder 43 herausgeführt.

Der Zylinder 43 ist über eine Verbindungsleitung 45
mit einem Druckspeicher 46 verbunden. Die Verbindungsleitung 45 mündet in einen in Richtung auf das
Auge 40 unterhalb des Kolbens 42 liegenden Bereich
des Zylinders 43 ein. Jeweils ein Zylinder 43 kann
an jeder der beiden Treppensäulen 31, 32 in einer
Schwenklagerung 47 schwenkbar gelagert sein.

Zwischen dem Zylinder 43 und dem Druckspeicher 46
kann in der Verbindungsleitung 45 ein handbetätigtes
Absperrventil 48 und ein Magnetventil 49 liegen.
Beide sind geeignet, den Durchfluß eines Mediums 5o durch
die Verbindungsleitung 45 zu unterbrechten.

Außerdem kann in die Verbindungsleitung 45 eine Seitenleitung 51 münden, die mit dem Ausgleichtsbehälter 52 verbunden
ist. Vor der Einmündung in den Ausgleichsbehälter 52 kann ein Druckbegrenzungsventil 53 in die Seitenleitung 51 eingebaut werden, das sich in Richtung auf den Ausgleichsbehälter 42 öffnet, wenn in der Verbindungsleitung 45 und
damit auch in der Seitenleitung 51 ein unzulässiger Druckanstieg zu verzeichnen ist. Dieses Absperrventil wird von einer
Umgehungsleitung 54 überbrückt, in der ein freier Rücklauf 55
angeordnet ist. Durch diesen freien Rücklauf 55 kann das
Medium 5o unter Umgehung des Absperrventils 53 in Richtung
auf die Verbindungsleitung 45 zurückfließen, wenn dort ein
bestimmter Druck unterschritten wird.

Beim Verschwenken der Treppe 2 verschiebt sich der
Kolben 42 innerhalb des Zylinders 43. Er nimmt
innerhalb des Zylinders 43 eine zur Treppenlage bestimmte Stellung ein, wenn die Treppe 2
sich in ihrer ausgeschwenkten Lage befindet. Der
Kolben 42 verschiebt sich in Richtung auf die
Schwenklagerung 47, wenn die Treppe 2 in Richtung
auf ihre hochgeklappte Lage, in der sie weitgehend mit dem Saumenprofil 8 der Verladebühne 1 abschließt, verschwenkt wird. Demgegenüber verschiebt sich der Kolben in Richtung auf die druckdichte Packung 44, wenn die Treppe 2 aus der hochgeklappten Lage in eine ausgeschwenkte Lage weiter
in ihre niedrigste Schwenklage abgesenkt wird. Bei
dieser Absenkbewegung wächst der Druck innerhalb
des Zylinders 43 und wirkt sich innerhalb des

Druckspeichers 46 aus. Dieser Druckspeicher 46 enthält
eine Blase, Membrane oder einen Kolben 56, die einen mit
einem Gas gefüllten Großraum 57 von einem mit dem Medium befüllbaren kleineren Raum 58 trennt. Dieser kleine
Raum 58 ist über eine entsprechende Bohrung 59, die in
einem den Druckspeicher 46 umgebenden Gehäuse 60 vorgesehen ist, mit der Verbindungsleitung 45 verbunden. Der
Großraum 57 kann über eine Öffnung 61, die mit einem Füllventil verschlossen ist, mit Gas befüllt werden. Dabei ist im Großraum 57 ein Gasdruck zu erzeugen, der so hoch ist, daß er das notwendige Ausgleichsmoment erzeugen kann.

Beim Verschwenken der Treppe 2 aus der hochgeklappten Lage verdichtet der Kolben 42 das Medium 50 geringfügig. Dadurch wächst der Druck im Druckspeicher 46, so daß das Gas im Großraum 57 verdichtet wird. Dieses verdichtete Gas stellt einen Energiespeicher dar, der aufgezehrt werden kann, wenn die Treppe aus ihrer abgesenkten Lage zurück in die hochgeklappte Lage verschwenkt wird. In diesem Falle gleitet der Kolben 42 im Zylinder aufwärts in Richtung auf die Schwenklagerung 47. Dadurch bildet sich im Zylinder 43 ein verminderter Druck aus, der dazu führt, daß das Medium aus dem gespannten Druckspeicher 46 in Richtung auf den Zylinder 43 nachströmt und den Kolben 42 aufwärts schiebt.

Um zu gewährleisten, daß das Medium 50 vollkommen aus dem kleinen Raum 58 wieder abströmt, ohne daß es teilweise zwischen der Membrane 56 und dem Gehäuse 60 festgehalten wird, kann im kleinen Raum 58 eine Druckabbauvorrichtung 62 vorgesehen werden, die das Auslaufen des Mediums 50 aus dem Druckspeicher 46 fördert. Je mehr Stufen die Treppe 2 hat, umso höher muß das Gasvolumen im Druckspeicher 46 vorgespannt werden. Zu diesem Zwecke wird höher komprimiertes Gas in den Großraum 57 eingespeist. Zweckmäßigerweise wird als Gas ein großmolekulares Gas, beispielsweise Argon, gewählt.

Eine Arretierung der Treppe 2 in jeder Schwenklage ist leicht dadurch möglich, daß der Durchfluß des Mediums 50 mit Hilfe des handbetätigten Ventils 48 verhindert wird. Auf diese Weise ist gewährleistet, daß der Kolben 32 sich nicht bezüglich des Zylinders 43 bewegen kann.

Darüberhinaus stellt das Magnetventil 49 eine Sicherheitsvorrichtung dar, die einen nicht gewollten Zugang zum hochgelegenen Arbeitsplatz auf dem Fahrzeug verhindert, z.B.
- in Verbindung mit einem Erdungstestgerät wird die Treppe 2 erst freigegeben, wenn das Fahrzeug geerdet ist,
- durch Betätigung eines Freigabeschalters im Disponentenraum wird dem Fahrer die Treppe 2 für den Zugang zum hochgelegenen Arbeitsplatz auf Fahrzeugen ermöglicht.

Die Funktion des Ausgleichtsbehälters 52 tritt nur dann ein, wenn Druckveränderungen in der Verbindungsleitung 45 stattfinden. Bei der üblichen Verschwenkung der Treppe 2 wird kein Medium aus der Verbindungsleitung 45 durch das Absperrventil 53 in den Ausgleichsbehälter 52 eintreten.

Es ist auch möglich, einen Zylinder 43 mit einem zweiten Druckraum 75 zu versehen, der über eine Druckleitung 76 druckführend mit einer Druckmittelquelle 77 verbunden ist. Zwischen dem zweiten Druckraum 75 und der Druckmittelquelle 77 ist ein handbetätigtes Dreiwegeventil 78 vorgesehen, dessen dritter Weg der Druckentlastung dient, sofern dieser erforderlich werden sollte. In der Druckleitung 76 befindet sich darüberhinaus ein Magnetventil 79. Das von der Druckmittelquelle 77 in die Druckleitung 76 eingeführte Druckmittel besteht aus Preßluft. Es ist jedoch auch möglich, ein anderes Druckmittel, wie beispielsweise ein anderes Gas oder Öl vorzusehen.

Mit einer Kolben-Zylinderanordnung der vorbeschriebenen Art ist es möglich, den Absenkvorgang automatisch durchzuführen, indem das Dreiwegeventil 78 und das Magnetventil 79 geöffnet werden und das aus der Druckmittelquelle 77 aufgebrachte Druckmittel in den zweiten Druckraum 75 einströmen kann. Dadurch wird der Kolben 42 in Richtung auf den ersten Druckraum 8o des Zylinders 43 verschoben und das in diesem Raum vorhandene Medium 5o über die Verbindungsleitung 45 in den Druckspeicher 46 gedrück wird. Durch Verschließen der Ventile 48 oder 49 kann der Kolben 42 in jeder beliebigen Lage im Zylinder 43 festgelegt werden. Nach Druckentlastung des zweiten Druckraumes 75 wird der Kolben 42 durch das im Druckspeicher 46 vorhandene Medium wieder in Richtung auf den zweiten Druckraum 75 verschoben.

An der Treppe 2 können unmittelbar die Sicherheitsgitter 3 angekoppelt sein. Sie dienen der Unfallverhütung. Durch sie wird vermieden, daß ein ausrutschender Fahrer von seinem Fahrzeug 11 in einen zwischen dem Fahrzeug 11 und der Verladebühne 1 liegenden Freiraum stürzt. Dieses Sicherheitsfanggitter kann entsprechend der Länge eines an der Verladebühne 1 haltenden Fahrzeuges 11 sehr lang sein. Aus diesem Grunde ist das Sicherheitsfanggitter 3 an seinen von der Treppe 2 wegweisenden Enden mit Kolben-Zylinder-Anordnungen 42,43 versehen. Im Bereich der Treppe 2 sind die Auffanggitter 3 mit dieser über Verbindungshebel 63 angekuppelt.

Auf der letzten Treppenstufe 13 kann ein ein- oder beidseitiger Handlauf 64 befestigt sein. Die Handlaufstütze steht senkrecht zur Oberfläche 22 der Stufe 13 und ist in Richtung auf die Treppensäule 31, 32 rechtwinklig umgebogen. Im Bereich des sich in Richtung auf die Treppensäule 31, 32 erstreckenden Stückes 65 verläuft dieses parallel zum Stufenschwenkhebel 27. In der ausgeschwenkten Lage der Treppe 2 befindet sich dieses Stück mithin in horizontaler Lage. In ihm ist ein Schwenkgelenk 66 angeordnet, das Bewegungen in einer Ebene zuläßt, die planparallel zu einer von von den Treppensäulen 31, 32 aufgespannten Ebene verläuft. Das Stück 65 ist im Bereich der Treppensäule 31, 32 in einem Schwenklager 67 schwenkbar gelagert, zwischen dem und dem Schwenkgelenk 66 der Handlauf 64 gerade und jeweils parallel zum Stufenschwenkhebel 27 verläuft.

Die Stufenparallelführungen 34 sind an ihrer dem Fahrzeug 11 zugewandten Unterseite mit einem Vierkantfender 68 versehen. Dieser ist fest mit der Unterseite der Stufenparallelführung 34 verbunden.

Um zu verhindern, daß bei hochgeklappter Treppe 2 ein über die feste Stufe 16 hinausragender Fuß unter die erste bewegliche Stufe 17 geklemmt wird, wird diese mit einem Fußschutz 69 versehen. Dieser erstreckt sich auf einer der festen Stufe 16 zugewandten Seite der ersten beweglichen Stufe 17 und verhindert, daß der Fuß unter die Oberfläche 20 der Stufe 17 geschoben werden kann.

Oberhalb der Verladebühne 1 ist das Übergabegerät 72 angeordnet. Es besteht aus einem Füllarm 81, der als mit Gelenkverbindungen 82 versehene bewegliche Rohrleitungen ausgebildet ist. Der Füllarm 81 ist an seinem einen, dem vor der Verladebühne 1 stehenden Fahrzeug 11 abgewandten Ende mit einer Zuführung für das fließfähige Medium verbunden. An seinem dem Fahrzeug 11 zugewandten Ende ist der Füllarm 81 mit dem Abfüllkopf 73 versehen, der in die Befüllungsöffnung 74 des Fahrzeugs 11 eingeführt werden kann. Der Füllarm 81 besteht aus einem im wesentlichen in einem Schwenklager 83 im wesentlichen in horizontaler Richtung verschwenkbar gelagerten oberen Armteil 84, der an seinem dem Schwenklager 83 entgegengesetzten Ende über ein mit vertikaler Schwenkachse versehenes Schwenklager 85 und ein weiteres mit horizontal verlaufender Schwenkachse versehenes Schwenklager 86 mit einem unteren Armteil 87 verbunden ist. Der untere Armteil 87 ist über die Schwenklager 85 und 86 im wesentlichen in horizontalen und vertikalen Richtungen schwenkbar mit dem oberen Armteil 84 verbunden. In vertikaler Bewegungsrichtung ist der untere Armteil 87 mit einem gashydraulischen Momentenausgleich versehen, der eine Kolben-Zylinder-Anordnung 88 enthält. Diese umfaßt einen Zylinder 43, der beweglich an dem unteren Armteil 87 im Abstand zum Schwenklager 86 angelenkt ist. Der Kolben 42 der Kolben-Zylinder-Anordnung 88 ist über die Kolbenstange 39 beweglich an einem Abstützglied 89 angelenkt, das auf der dem unteren Armteil 87 abgewandten Seite des Schwenklagers 86 am oberen Armteil 84 benachbart zum Schwenklager 86 angeordnet ist. Das Abstützglied 89 ist dabei im Abstand zur Schwenkachse des Schwenklagers 86 angeordnet.

Die Kolben-Zylinder-Anordnung 88 ist mit einem Druckraum 80 für die Aufnahme eines Druckmediums 50 versehen. Der über eine Verbindungsleitung 45 mit einem Druckspeicher 46 in Verbindung steht. Zwischen Druckspeicher 46 und dem Druckraum 80 ist mindestens ein Absperrventil 48 vorgesehen. Es ist auch möglich, in die Leitung 45 ein Magnetventil 49 einzufügen.

Mit der Kolben-Zylinder-Anordnung 88 werden die durch vertikale Schwenkbewegungen des unteren Armteiles 87 auftretenden Momente ausgeglichen. Der Abfüllkopf 73 und der mit ihm verbundene untere Armteil 87 eines Übergabegerätes 72 weisen ein erhebliches Gewicht auf, das durch die Kolben-Zylinder-Anordnung 88 abgefangen wird. Bei Absenkung des Abfüllkopfes 73 in eine Befüllungsöffnung 74 eines Fahrzeuges 11 wird der Kolben 42 der Kolben-Zylinder-Anordnung 88 in Richtung auf den Druckraum 8o verschoben und das darin vorhandene Druckmedium 5o über die Verbindungsleitung 45 in den Druckspeicher 46 gedrückt, bis bei Erreichen einer vorgewählten Stellung des Abfüllkopfes 73 eine der Absperrventile 48, 49 geschlossen wird. Dadurch wird das restliche Medium 5o im Druckraum 8o eingeschlossen und der Abfüllkopf 73 in der vorbestimmten Höhenstellung arretiert.

Nach Öffnung der Ventile 48, 49 kann der Abfüllkopf 73 von dem Benutzer der Verladevorrichtung leicht von Hand angehoben werden, da die Hubbewegung durch das aus dem Druckspeicher 46 in den Druckraum 8o zurückströmende Medium 5o unterstützt wird.

Es ist auch möglich, die Kolben-Zylinder-Anordnung 88 mit einem zweiten Druckraum 75 auszustatten, die über eine Druckleitung 76 mit einer Druckmittelquelle 77 verbunden ist und zwischen die mindestens ein Ventil 78, 79 geschaltet ist. Die Druckmittelquelle 77 besteht beispielsweise aus einer Preßluftquelle. Mit dieser Ausgestaltung der Vorrichtung ist es möglich, durch pneumatische oder hydraulische Betätigung den Absenkungsvorgang des unteren Armteiles 87 und des damit verbundenen Abfüllkopfes 73 zu bewerkstelligen, da das aus der Druckmittelquelle 77 aufgebrachte Druckmittel den zweiten Druckraum 75 beaufschlagt und den Kolben 42 in Richtung auf den ersten Druckraum 8o verschiebt. Diese Ausgestaltungsform ist besonders vorteilhaft, damit auch ein automatisch gesteuertes Übergabegerät ausgestattet werden kann. Wegen der erheblichen Momente, die bei einem zum Befüllen eines Tankwagens einzusetzenden Übergabegerätes auftretenden erheblichen Momente ist mit einer so gestalteten Kolben-Zylinder-Anordnung eine besonders präzise Steuerung des Abfüllkopfes 73 in bezug auf die Befüllungsöffnung 74 möglich. Bei Ausgestaltung des Übergabegerätes als handgesteuertes Übergabegerät ist es vorteilhaft, die Betätigungsorgane für die Ventile 48, 49, 78, 79 in einer am Füllarm 81 angebrachten Steuerungseinheit zusammen zu fassen.

Oberhalb des an der Verladebühne 1 stehenden Fahrzeuges
11 ist der Sicherheitshandlauf 71 angeordnet, der sich im
wesentlichen in Längsrichtung des Fahrzeuges 11 erstreckt.
Er besteht aus einem im wesentlichen rechteckig geformten
Körper, der aus Rohren gebildet ist. Der Sicherheitshandlauf 71 ist über je eine Kolben-Zylinder-Anordnung 9o
an einem oberhalb des Fahrzeuges 11, beispielsweise an
einer die Verladebühne überspannenden Hallendecke 91
vorgesehenen Befestigungspunkten 92 aufgehängt ist. Über
die Kolben-Zylinder-Anordnungen 9o ist der Sicherheitshandlauf 71 durch Verschiebebewegungen höhenverstellbar
ausgebildet. Die dabei entstehenden Momente werden durch
die Kolben-Zylinder-Anordnung 9o ausgeglichen und gedämpft.
Nach einer Ausführungsform der Erfindung weist die Kolben-
Zylinder-Anordnung 9o einen ersten Druckraum 8o auf, die
über eine Verbindungsleitung 45 mit einem Druckspeicher 46
druckführend verbunden ist. In der Verbindungsleitung 45
befindet sich mindestens ein Ventil 48, das als handbetätigtes Ventil ausgebildet sein kann. Es ist auch möglich,
zusätzlich ein Magnetventil 49 in die Verbindungsleitung
45 einzufügen. In dieser Ausgestaltungsform kann der
Sicherheitshandlauf durch den Benutzer von Hand soweit
in Richtung auf die Tankdecke 12 auf der der Verladebühne 1 abgewandten Seite der Befüllungsöffnung 74 abgesenkt werden, daß auch die Seite der Tankdecke 12 gegen
Unfallgefahren abgesichert ist. Nach Erreichen einer
vorbestimmten tiefsten Stellung des Sicherheitshandlaufes
71 kann wenigstens eines der Ventile 48, 49 geschlossen
und der Sicherheitshandlauf 71 in der vorgesehenen Stellung
arretiert werden.

In einer anderen Ausführungsform der Erfindung ist es möglich, die Kolben-Zylinder-Anordnung 9o mit einem zweiten
Druckraum 75 zu versehen, der über eine Druckleitung 76
mit einer Druckmittelquelle 77 in Verbindung steht. Die
Druckleitung 76 weist mindestens ein Ventil 78, 79 zur
Steuerung der Druckbeaufschlagung des zweiten Druckraumes 75

auf. Mit dieser Ausführungsform der Erfindung ist es möglich, mit Hilfe eines Druckmittels den Sicherheitshandlauf 71 auf eine vorbestimmte Höhe abzusenken und nach Druckentlastung des zweiten Druckraumes 75 wieder in die vorbestimmte höchste Stellung anzuheben. Mit dieser Ausführungsform der Erfindung ist es möglich, die Absenkung des Sicherheitshandlaufes teil- oder vollautomatisch durchzuführen.

Der Sicherheitshandlauf weist an seiner der Verladebühne abgewandten Seite eine im wesentlichen sich vertikal von einer oberen Begrenzung 93 des Sicherheitshandlaufes 71 erstreckende Übersturzsicherung auf, die als Fanggitter ausgebildet ist und die einen der Befüllungsöffnung 74 des Fahrzeuges 11 abgewandte Zone gegen Absturzgefahren für einen Benutzer sichert.

Mit den erfindungsgemäß ausgebildeten Vorrichtungen ist es möglich, eine Verladestation für fließfähige Medien gegen Unfallgefahren des Benutzungspersonals vollständig zu sichern und die Handhabung des Übergabegerätes leicht gängig zu gestalten.

Patentansprüche:

1. Ausrüstung für eine Verladebühne, an der Ladegut auf Fahrzeuge verschiedener Höhen verladen wird, mit einer Höhenverstellbarkeit durch Schwenkbewegungen, die durch einen Momentenausgleich gedämoft sind, dadurch gekennzeichnet, daß für den Momentenausgleich eine mit einem kompressiblen Medium (50) mindestens teilweise gefüllte Kompressionsanordnung vorgesehen ist, die mindestens auf ihrer Druckseite mit einem Druckspeicher (46) verbunden ist.

2. Ausrüstung nach Anspruch 1, dadurch gekennzeichnet, daß sie als eine Treppe (2) ausgebildet ist, die an der Verladebühne (1) stufenlos verschwenkbar gelagert ist.

3. Ausrüstung nach Anspruch 1 und 2, dadurch gekennzeichnet, daß die Treppe (2) aus mehreren Stufen (16, 17, 18, 13) besteht, die in Wangen (24, 25, 26) schwenkbar gelagert sind, von denen mindestens eine mit einer Anlenkung für die Kompressionsanordnung versehen ist, die an der Verladebühne (1) befestigt ist.

4. Ausrüstung nach Anspruch 1 bis 3, dadurch gekennzeichnet, daß als Kompressionsanordnung eine Kolben-Zylinder-Anordnung (42, 43) vorgesehen ist, deren Druckraum mit dem Druckspeicher (46) druckführend verbunden ist.

5. Ausrüstung nach Anspruch 1 bis 4, dadurch gekennzeichnet, daß der Zylinder (43) an der Verladebühne (1) und der Kolben (42) an der Wange (24, 25, 26) mindestens einer schwenkbaren Stufe (17, 18, 13) schwenkbar befestigt ist.

6. Ausrüstung nach Anspruch 1 bis 5, dadurch gekennzeichnet, daß die Wangen (24, 25, 26) durch zwei einander parallel verlaufende Träger miteinander verbunden sind, die bei um $90^\circ$ ausgeschwenkter Treppe (2) ihren größten und bei in Richtung auf die Verladerampe (1) eingeschwenkter Treppe (2) ihren kleinsten Abstand voneinander halten und die jeweils im Bereich der Verladebühne (1) in einer Treppensäule (31, 32) schwenkbar gelagert sind.

7. Ausrüstung nach Anspruch 1 bis 6, dadurch gekennzeichnet, daß die Träger als ein Stufenschwenkhebel (27) und eine Stufenparallelführung (34) ausgebildet sind, die im ausgeschwenkten $90^\circ$ - Zustand der Treppe (2) parallel zu einer zu betretenden Oberfläche (19, 20, 21, 22) der Stufen (16, 17, 18, 13) in horizontaler Richtung verlaufen.

8. Ausrüstung nach Anspruch 1 bis 7, dadurch gekennzeichnet, daß der Kolben (42) an dem der Außenfläche (19, 20, 21, 22) der Stufen (16, 17, 18, 13) zugewandten Stufenschwenkhebel (27) angelenkt ist.

9. Ausrüstung nach Anspruch 1 bis 8, dadurch gekennzeichnet, daß die Kolben-Zylinder-Anordnung (42, 43) innerhalb der Treppensäule (31, 32) verläuft und durch diese verkleidet ist.

10. Ausrüstung nach Anspruch 1 bis 9, dadurch gekennzeichnet, daß zwischen dem Druckraum des Zylinders (43) und dem Druckspeicher (46) eine Verbindungsleitung (45) verläuft, in der sich notwendige Armaturen befinden.

11. Ausrüstung nach Anspruch 1 bis 10, dadurch gekennzeichnet, daß ein Absperrventil als handbetätigtes Ventil (48) ausgebildet ist.

12. Ausrüstung nach Anspruch 1 bis 11, dadurch gekennzeichnet, daß außer dem handbetätigten Ventil (48) ein Magnetventil (49) in der Verbindungsleitung (45) angeordnet ist.

13. Ausrüstung nach Anspruch 1 bis 12, dadurch gekennzeichnet, daß im Druckspeicher (45) ein gasgefüllter Großraum (57) angeordnet ist, der vom Druck der Kolben-Zylinder-Anordnung (42, 43) beaufschlagt wird.

14. Ausrüstung nach Anspruch 1 bis 14, dadurch gekennzeichnet, daß der Großraum (57) durch eine Membrane (56), Blase oder Kolben, vom Medium (50) getrennt ist.

15. Ausrüstung nach Anspruch 1 bis 14, dadurch gekennzeichnet, daß im Druckspeicher (46) eine den Abfluß des kompressiblen Mediums (50) befördernde Druckabbauvorrichtung (62) vorgesehen ist.

16. Ausrüstung nach Anspruch 1 bis 15, dadurch gekennzeichnet, daß der Großraum (57) mit einem großmolekularen Gas gefüllt .

17. Ausrüstung nach Anspruch 1 bis 16, dadurch gekennzeichnet, daß der Großraum (57) mit Argon gefüllt.

18. Ausrüstung nach Anspruch 1 bis 17, dadurch gekennzeichnet, daß der Druckspeicher (46) zusammen mit der Kolben-Zylinder-Anordnung (42, 43) eine auch bei raschen Schwenkbewegungen flach verlaufende Druckkurve aufweist.

19. Ausrüstung nach Anspruch 1 bis 18, dadurch gekennzeichnet, daß im Druckspeicher (46) eine Blase, Membrane oder Kolben zur Abgrenzung zwischen Gas-
und Hydraulikraum vorgesehen ist.

20. Ausrüstung nach Anspruch 1 bis 17, dadurch gekennzeichnet, daß in der Verbindungsleitung (45)
bei Verwendung eines flüssigen Mediums (50) ein
Ausgleichsbehälter (52) zur Aufnahme von sich unter dem Einfluß rascher Schwenkbewegungen ausbreitenden Mediums (50) vorgesehen ist.

21. Ausrüstung nach Anspruch 1 bis 18, dadurch gekennzeichnet, daß zwischen der Verbindungsleitung
(45) und dem Ausgleichsbehälter (52) ein Absperrventil (53) vorgesehen ist, das bei Überschreiten
eines vorgegebenen Druckes eine Öffnung in Richtung
auf den Ausgleichbehälter (52) aufweist.

22. Ausrüstung nach Anspruch 1 bis 21, dadurch gekennzeichnet, daß das Absperrventil (53) mit einer
Umgehungsleitung (54) versehen ist, die einen freien
Rücklauf (55) des Mediums (50) vom Ausgleichsbehälter (52) in die Verbindungsleitung (45) aufweist.

23. Ausrüstung nach Anspruch 1 bis 22, dadurch gekennzeichnet, daß die Treppe (2) mindestens einen
einseitigen Handlauf (64) aufweist, der aus zwei
gegeneinander schwenkbaren Stücken besteht, von denen das eine (5) parallel zum Stufenschwenkhebel
(27) geführt ist und das andere senkrecht auf der
Oberfläche (22) der am weitesten von der Verladebühne (1) entfernten letzten Stufe (13) steht.

24. Ausrüstung nach Anspruch 1 bis 23, dadurch gekennzeichnet, daß die letzte Stufe (13) an ihrer
von der Oberfläche (22) abgewandten Unterseite
mit einem als Rolle ausgebildeten Rundfender (15)
versehen ist.

25. Ausrüstung nach Anspruch 1 bis 24, dadurch gekennzeichnet, daß die von den Oberflächen (19, 20, 21, 22) der Stufen (16, 17, 18, 13) abgewandte Stufenparallelführung (34) an ihrer den Oberflächen (19, 20, 21, 22) abgewandten Unterseite mit einem Vierkantfender (68) versehen ist.

26. Ausrüstung nach Anspruch 1 bis 25, dadurch gekennzeichnet, daß mit der Treppe (2) ein Auffanggitter (3) gekuppelt ist, das an der Verladebühne (1) schwenkbar gelagert ist und an seinen der Treppe (2) abgewandten Außenenden mit hydraulischem Momentenausgleich versehen ist.

27. Ausrüstung nach Anspruch 1 bis 26, dadurch gekennzeichnet, daß das Auffanggitter (3) an seiner dem Fahrzeug (11) zugewandten Unterseite mit mindestens einem als Rolle ausgebildeten Rundfender (70) versehen ist.

28. Ausrüstung nach Anspruch 1 bis 27, dadurch gekennzeichnet, daß zum Einziehen der Treppe aus ihrer ausgeschwenkten Lage ein am Handlauf integrierter Einziehgriff vorgesehen ist.

29. Ausrüstung nach Anspruch 1 bis 28, dadurch gekennzeichnet, daß zum Einziehen der Treppe aus ihrer ausgeklappten Lage eine im Hydrauliksystem integrierte Druckerhöhungseinrichtung vorgesehen ist.

3o. Ausrüstung nach Anspruch 1 bis 29, dadurch gekennzeichnet, daß in einem Bereich oberhalb der Verladebühne (1) mindestens ein Übergabegerät (72) für fließfähige Medien angeordnet ist.

31. Ausrüstung nach Anspruch 1 bis 3o, dadurch gekennzeichnet, daß das Übergabegerät (72) aus einem Füllarm (81) besteht, der in mindestens einer Ebene stufenlos schwenkbar gelagert ist.

32. Ausrüstung nach Anspruch 1 bis 31, dadurch gekennzeichnet, daß der Füllarm (81) einen Abfüllkopf (73) aufweist, der durch Schwenkbewegungen höhenverstellbar ist, die durch einen hydraulischen Momentenausgleich gedämpft sind.

33. Ausrüstung nach Anspruch 1 bis 32, dadurch gekennzeichnet, daß ein Gas-hydraulischer Momentenausgleich vorgesehen ist.

34. Ausrüstung nach Anspruch 1 bis 33, dadurch gekennzeichnet, daß der Füllarm (81) aus einem im wesentlichen horizontal verschwenkbaren oberen Armteil (84) und einem im wesentlichen horizontal und vertikal verschwenkbaren, mit dem Abfüllkopf (73) versehenen unteren Armteil (86) ausgebildet ist, der im Bereich seines dem oberen Armteil (84) zugewandten Endes mit dem hydraulischen Momentenausgleich versehen ist.

35. Ausrüstung nach Anspruch 1 bis 34, dadurch gekennzeichnet, daß der Momentenausgleich aus einer Kompressionsanordnung besteht, die eine Kolben-Zylinder-Anordnung (88) aufweist, die sich mit einem Ende am unteren Armteil (87) im Abstand zu einem diesen mit dem oberen Armteil (84) verbindenden Schwenklager (86) beweglich angelenkt ist und deren entgegengesetztes Ende beweglich an einem Abstützglied (89) angelenkt ist, das benachbart zu dem Schwenklager (86) am oberen Armteil (84) angeordnet ist.

36. Ausrüstung nach Anspruch 1 bis 35, dadurch gekennzeichnet, daß das Abstützglied (89) im Abstand zur Schwenkachse des Schwenklagers (86) angeordnet ist.

37. Ausrüstung nach Anspruch 1 bis 36, dadurch gekennzeichnet, daß auf einer der Verladebühne (1) abgewandten Seite oberhalb eines an der Verladebühne (1) stehenden Fahrzeuges (11) ein Sicherheitshandlauf (71) vorgesehen ist, der sich im wesentlichen in Längsrichtung des Fahrzeuges (11) erstreckt und der durch Verschiebebewegungen höhenverstellbar ist, die durch einen hydraulischen Momentenausgleich gedämpft sind.

38. Ausrüstung nach Anspruch 1 bis 37, dadurch gekennzeichnet, daß der Momentenausgleich als Gas-hydraulischer Momentenausgleich ausgebildet ist.

39. Ausrüstung nach Anspruch 1 bis 38, dadurch gekennzeichnet, daß der Sicherheitshandlauf (71) aus einem langgestreckten, im wesentlichen rechteckig geformten Körper besteht, der im Bereich seiner Enden an je einer Kolbenstange (39) je einer Kolben-Zylinder-Anordnung (9o) aufgehängt ist, deren jeweils anderes Ende an einem Oberhalb des Fahrzeuges (11) angeordneten Befestigungspunkt (92) befestigt ist.

4o. Ausrüstung nach Anspruch 1 bis 39, dadurch gekennzeichnet, daß der Sicherheitshandlauf (71) mit einer Übersturzsicherung (94) versehen ist, die als in Längsrichtung des Sicherheitshandlaufes (71) verlaufender, auf der der Verladebühne (1) abgewandten Seite des Sicherheitshandlaufes (71) angeordnete, im wesentlichen horizontal verlaufendes Gitter ausgebildet ist.

41. Ausrüstung nach Anspruch 1 bis 4o, dadurch gekennzeichnet, daß die Kolben-Zylinder-Anordnungen (88, 9o) je einen Druckraum (8o) für die Aufnahme eines Durckmediums (5o) aufweisen, die mit einem Druckspeicher (46) druckführend verbunden sind.

42. Ausrüstung nach Anspruch 1 bis 41, dadurch gekennzeichnet, daß zwischen dem Druckraum (80) und dem Druckspeicher (46) eine Verbindungsleitung (45) verläuft, die mit mindestens einem Absperrventil (48, 49) versehen ist.

43. Ausrüstung nach Anspruch 1 bis 42, dadurch gekennzeichnet, daß die Kolben-Zylinder-Anordnung (88, 9o) je einen zweiten Druckraum (75) aufweisen, der an einer dem Druckraum 8o abgewandten Seite im Zylinder (43) angeordnet ist und der mit einer Druckmittelquelle (77) druckführend verbunden ist.

44. Ausrüstung nach Anspruch 1 bis 43, dadurch gekennzeichnet, daß zwischen dem zweiten Druckraum (75) und der Druckmittelquelle (77) eine zweite Druckleitung (76) verläuft, die mit mindestens einem Absperrventil (87, 79) versehen ist.

45. Ausrüstung nach Anspruch 1 bis 44, dadurch gekennzeichnet, daß die Absperrventile (48, 49, 78, 79) mit Betätigungsorganen versehen sind, die in einer Steuerungseinheit zusammengefaßt sind.

46. Ausrüstung nach Anspruch 1 bis 45, dadurch gekennzeichnet, daß die an der Treppe (2) angeordnete Kolben-Zylinder-Anordnung (42, 43) einen zweiten Druckraum aufweist, der mit einer Druckmittelquelle (77) druckführend verbunden ist.

Fig. 1

Fig. 2

1/4

0868980

Fig. 3

63        63        3        46

46   70        70

4   9        5   10  6        7  10        9        1

4/4

4        9        8        5   6  10   2   10  7   5   9   3        4

46        63        63        3        46

3

0098600

Fig. 4

Fig. 5

Fig. 6

Fig. 2

Fig. 8

Fig. 9

0868600

Fig. 10

Fig. 11

7/7

0098980

*Fig. 12*